# EUROPEAN PATENT SPECIFICATION

(11) **EP 1 818 184 B1**
(45) Date of publication and mention of the grant of the patent: **27.08.2008**
(21) Application number: 06425076.4
(22) Date of filing: 13.02.2006
(51) Int. Cl.: B60B 33/00

(54) **Support for a swivelling wheel**
Halter für Lenkrolle
Support pour roulette pivotante

(43) Date of publication of application: 15.08.2007
(73) Proprietor: Al. Fer &C. S.r.l., 40012 Calderara di Reno (Bologna) (IT)
(72) Inventor: Alvisi, Paolo, 40141 Bologna (IT)
(74) Representative: Fanzini, Valeriano

(56) References cited:
- DE-A1- 3 406 685
- DE-A1- 19 611 902
- DE-B- 1 239 073
- US-A- 1 829 862

## Description

The present invention relates to a support for a swivelling wheel, in particular a swivel support for wheels intended for manual movement.

The known supports for swivelling wheels, referred to in this description, comprise a rotating unit, to which the wheel is attached, rotatably connected to a fixing and support element.

The fixing and support element is designed to allow the support, and therefore also the wheel, to be attached to a correspondent object, such as a set of shelves, a flower box, a trolley, generically referred to in this description, or any other object which must be equipped with wheels for convenient manual movement.

The axis of rotation of the rotating unit is usually transversal to the rolling axis of the wheel and between the rotating unit and the fixing and support element there are normally rollers, bearings or balls inserted, to which specific reference is made below although without in any way limiting the scope of the invention, allowing rotation of the rotating unit.

The balls are usually positioned in such a way that they form a circle ring, commonly known as "ring of balls", its axis substantially coinciding with the axis of rotation of the rotating unit.

The lower portion of the fixing and support element therefore has a ball race matching a ring-shaped race made in the upper portion of the rotating unit.

Examples of known fixing and support element are described in documents DE19,611,902 A1 that forms the closest prior art according to the preamble of claim 1 and DE 34 06 685 A1

The effectiveness of the swivelling wheel as a whole depends, amongst other things, on the dimensions of the ring of balls, that is to say, the number of balls and their diameter, and, as a result, the diameter of the races.

In particular, the load-bearing capacity and functionality of the swivelling wheel depend on the diameter of the ring of balls and are greater the larger the latter is.

The known supports for swivelling wheels have several disadvantages due in particular to the fixing and support element.

Said fixing and support element has a predetermined external dimension, that is to say the dimension in plan view, inside which the race for the ring of balls must be delimited.

In the known supports, said ring of balls has a limited diameter relative to the dimension in plan view of the fixing and support element due, in particular, to the need for the presence in the fixing and support element of slits through which suitable screws are engaged in the corresponding object.

The known supports have a limited load-bearing capacity in relation to the extension of the fixing and support element because the race holds a limited number of balls.

Even the smooth sliding of the rotating unit in rotations relative to the plate is affected by the reduced diameter of the ring of balls and is not fluid under every load condition.

In the known rotating units there is also often a second ring of balls, positioned on the opposite side to the first with respect to the rotating unit so that the rotating unit slides very well relative to the fixing and support element.

In general, the rotating unit comprises a fork, rotatably connected to the plate: the first ring of balls is positioned between the fixing and support element and an upper cap of the fork which is suitably shaped so that the balls are free to rotate on the cap whilst the second ring of balls is positioned between the lower surface of the cap and an element which locks the fork to the plate.

The locking element normally has a second race in which the balls of the second ring of balls run. In other words, the cap is engaged between the first and the second rings of balls and is kept connected to the fixing and support element by the locking element, for example tubular and fitted on a respective pin projecting from the fixing element.

In the known supports, the extension of the cap and of the tubular element are quite limited due to the dimensions of the fixing and support element, in particular by the edge of the relative race.

Consequently, the diameter of the second ring of balls is also reduced, to the detriment of rotating unit smooth sliding.

In this context, the main technical need of the present invention is to propose a support for a swivelling wheel which is free of the above-mentioned disadvantages.

One aim of the present invention is to propose a support for a swivelling wheel with improved smooth sliding and load-bearing capacity.

Another aim of the present invention is to propose a support for a swivelling wheel in which the dimensions of the races for the balls are optimised according to the extension of the fixing plate.

A further aim of the invention is to produce a support for a swivelling wheel in which the extension of the cap and the ring-shaped element is not limited by the race of the first ring of balls. Another aim of the present invention is to propose a support for a swivelling wheel in which the balls are effectively protected by the edge of the relative race.

Further features and advantages of the present invention are more apparent in the detailed description below, with reference to a preferred, non-limiting, embodiment of a support for a swivelling wheel, illustrated in the accompanying drawings, in which:
- Figure 1 is a schematic side view of a support for swivelling wheels in accordance with the present invention;
- Figure 2 is a suitably interrupted schematic cross-section A - A of the support illustrated in Figure 1;
- Figure 3 is a top plan view of a fixing and support element which is part of the support illustrated in the previous figures;
- Figure 4 is a schematic cross-section B - B of the fixing and support element illustrated in Figure 3.

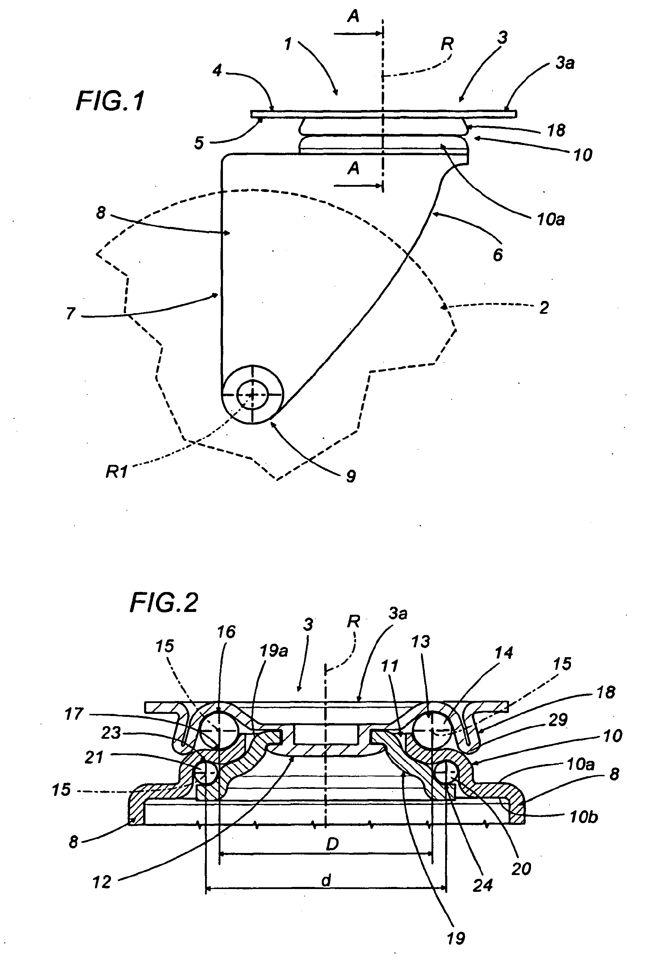

With reference to the accompanying drawings and in particular with reference to Figure 1, the numeral 1 denotes a support for a swivelling wheel 2, the wheel illustrated with a dashed line, in accordance with the present invention.

The support 1 comprises a fixing and support element 3 designed to be attached to the base of a corresponding object, such as a trolley, a flower box, a freezer or any other object, not illustrated, which must be equipped with wheels for convenient manual movement.

The fixing and support element 3 preferably consists of a suitably shaped plate 3a, described in more detail below.

The plate 3a has an upper face 4, for connection to the base of the object, and a lower face 5.

A unit 6 rotating about an axis R is rotatably connected to the plate 3a and is positioned below the plate, basically near the face 5.

The rotating unit 6 comprises a fork 7 whose prongs 8 extend transversally relative to the plate 3a and which are set up, at the ends 9, for connection to the wheel 2, which rotates about an axis R1.

The fork 7 has an upper portion, like a cap, which forms the base 10 of the fork 7.

The base 10 is designed for connection to the plate 3a.

The base 10 has a hole 11, substantially concentric with the axis R, for connection to a pin 12 extending from the plate 3a.

As illustrated in Figure 2, the pin 12 is riveted to lock the fork 7 to the plate 3a axially according to R, as described in further detail below.

The support 1 comprises primary sliding means 13 for guaranteeing the minimum friction possible between the lower face 5 of the plate 3a and the base 10 of the fork 7.

The primary sliding means 13 preferably comprise a plurality of balls 14 inserted between the plate 3a and the fork 7.

More precisely the balls 14 slide along a ring-shaped path 15, concentric with the hole 11.

The path 15 is basically delimited by the plate 3a and by the base 10 of the fork 7.

In the preferred embodiment illustrated, the top of the path 15 is formed by a substantially ring-shaped race 16 made in the lower face 5 of the plate 3a.

The bottom of the path 15 is delimited by a substantially ring-shaped race 17 made on the outer surface 10a of the base 10.

The plate 3a comprises a retaining edge 18 for the balls 14 which also delimits the race 16.

The edge 18 is positioned outside the race 16 and substantially has the shape of a truncated cone.

In other words, the retaining edge 18 is basically like a portion of a conical surface.

In particular the edge 18 diverges outwards from the upper face 4 towards the lower face 5 of the plate 3a.

In this way, the path 15, that is to say, the so-called upper ring of balls, has a diameter D which is maximised relative to the dimension of the plate 3a in plan view.

For a simple description, it is assumed that the upper path 15 or ring of balls, the race 16 and the race 17 substantially have the same diameter D.

The edge 18 widens towards the fork 7 to allow the path 15 to hold a suitably large number of balls 14.

The edge 18 is also designed to protect the balls 14 on the outside.

It should be noticed that, in the preferred embodiment illustrated by way of example, the plate 3a, described in more detail below, is made as a single body.

The above-mentioned pin 12 is preferably made in the plate 3a by pressing and forming.

The edge 18 is preferably made in the plate 3a by pressing and forming.

The race 16 is preferably made in the plate 3a by pressing and forming.

In other words, the pin 12, the race 16 and the edge 18 are made in the plate 3a by drawing.

In the preferred embodiment illustrated, the support 1 comprises an element 19 for locking the fork 7 to the plate 3a.

The locking element 19 is basically tubular and is fitted on the pin 12.

The element 19 is positioned below the base 10 of the fork 7 to keep the rotating unit 6 near to the plate 3a.

In the preferred embodiment illustrated by way of example, the locking element 19 is partly inserted in the hole 11.

As illustrated in Figure 2, the pin 12 is normally riveted, in the known way, on the element 19 to lock it against the base 10 of the fork 7.

The support 1 comprises secondary sliding means 20 operating between the lower or inner surface 10b of the base 10 of the fork 7 and the tubular element 19.

The secondary sliding means 20 preferably comprise a plurality of balls 21 inserted in a sliding path 22 concentric with the path 15.

The top of the path 22 is delimited by a substantially ring-shaped race 23.

The race 23 is made on the inner surface 10b of the base 10 of the fork 7.

The bottom of the path 22 is delimited by a substantially ring-shaped race 24 made on the outer surface 19a of the locking element 19.

The path 22, that is to say the so-called lower ring of balls, has a diameter d which is preferably greater than the diameter D of the upper ring of balls.

For a simple description, it is assumed that the lower path 22 or ring of balls, the race 23 and the race 24 substantially have the same diameter d.

The guide races 23, 24 for the balls 21 are preferably made by pressing and forming the base 10 of the fork 7 and the locking element 19.

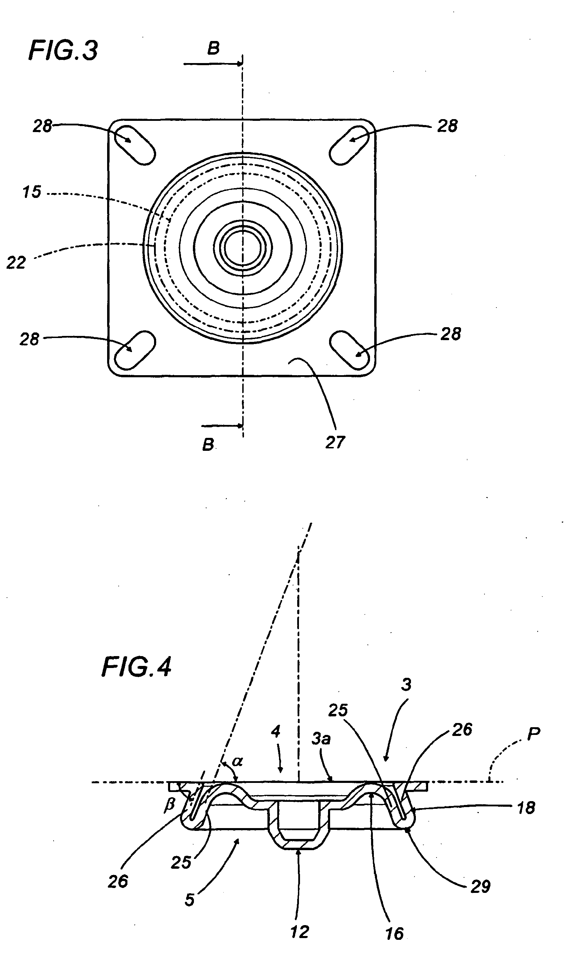

As illustrated in Figures 3 and 4, a more detailed examination of the plate 3a reveals that it is preferably obtained, as indicated, in a single body by forming.

The retaining edge 18 has an inner portion or side 25 against which the balls 14 run.

The inner side 25 substantially has the shape of a truncated cone.

The retaining edge 18 also has an outer portion or side 26.

The outer side 26 also preferably substantially has the shape of a truncated cone.

In more detail, in particular with reference to Figure 4, considering a plane P for connection of the upper face 4 to the corresponding object, not illustrated, the inner portion 25 is set at an angle α to the plane P and the outer portion 26 is set at an angle β to the plane P.

The angles α and β are, as indicated, preferably less than 90°.

In particular, the angle α is substantially less than 80°.

The angle α is preferably substantially less than 75° to optimise the possibility of plate 3a production without problems.

The angle α is preferably greater than 50° to optimise ball 14 retention.

The angle α is preferably greater than 65°.

In the preferred embodiment the angle α is substantially around 70° to optimise the processes for production of the plate 3a, in particular forming.

The angle P is preferably less than 80° to optimise ball 14 retention.

The angle P is preferably substantially less than 75° to optimise the possibility of plate 3a production without problems.

The angle P is preferably greater than 50° to improve the possibility of plate 3a production without problems.

In particular, the angle β is preferably greater than 65°.

In the preferred embodiment the angle β is substantially around 70° to optimise the processes for production of the plate 3a, in particular forming.

In the preferred embodiment illustrated, the angle β is substantially equal to the angle α so that the plate 3a is easy to process.

The outer portion 26 preferably surrounds the whole of the portion 25.

In particular, the outer portion 26 is bent against the inner portion 25 and they are joined to one another at the bottom by a substantially ring-shaped bend profile 29.

This shape makes the edge 18 very strong and on the plate 3a delimits an outer area 27 in which slots 28 are made for fixing the support 1 to the corresponding object to be moved.

In other words, since the outer zone 27 with the slots 28 made in it is located on the plate 3a, the maximum diameter D for the ring of balls, that is to say, the maximum diameter D of the path 15, is formed, in the preferred embodiment illustrated, by the edge 18 set at an angle which is less than 90° to the connecting plane P.

The invention described brings important advantages.

Use of the angled edge allows the diameter of the upper ring of balls to be maximised according to the dimension in plan view of the fixing plate.

In this way, the dimension in plan view being equal, the plate in accordance with the present invention supports a larger number of balls than the known plates.

The diameter of the lower ring of balls is also optimised by use of the plate with the edge of the race of the first ring of balls angled, in particular, it is noticeably extended.

The angled edge effectively protects the balls of the first ring of balls, keeping the dimensions contained.

The preferred presence of an outer portion and inner portion substantially covering one another guarantees more practical production.

The fixing and support plate produced as a single body allows a considerable saving in costs compared with the known plates.

The invention described has evident industrial applications and may be modified and adapted without thereby departing from the scope of the inventive concept. Moreover, all details of the invention may be substituted by other technically equivalent elements.

## Claims

1. A support for a swivelling wheel (2) comprising a rotating unit (6) rotatably connected to a fixing and support element (3) for connection to a corresponding object, primary sliding means (13) operating between the fixing and support element (3) and the rotating unit (6), the fixing and support element (3) comprising a race (16) for the primary sliding means (13) delimited by a corresponding edge (18) for retaining the primary sliding means (13), **the edge (18) being positioned outside the race (16) and having** the shape of a truncated cone, **the support being characterised in that the retaining edge (18) has an inner** portion **(25) having the shape of a truncated cone and an outer** portion **(26).**

2. The support according to claim 1, **characterised in that** the retaining edge (18) substantially constitutes a portion of a conical surface with its vertex on the opposite side to the race (16).

3. The support according to claim 1 or 2, **characterised in that** the inner portion (25) and the outer portion (26) respectively **are set** at an angle α and at an angle β to a plane (P) for connecting the support to the corresponding object.

4. The support according to claim 3, **characterised in that** the angle α is substantially less than 90°.

5. The support according to claim 3, **characterised in that** the angle α is substantially less than 80°.

6. The support according to claim 3, **characterised in that** the angle α is substantially less than 75°.

7. The support according to any of the claims from 3 to 6, **characterised in that** the angle α is substantially greater than 50°.

8. The support according to any of the claims from 3 to 6, **characterised in that** the angle α is substantially greater than 65°.

9. The support according to claim 3, **characterised in that** the angle α is substantially equal to around 70°.

10. The support according to any of the claims from 3 to 9, **characterised in that** the angle β is substantially less than 90°.

11. The support according to any of the claims from 3 to 9, **characterised in that** the angle β is substantially less than 80°.

12. The support according to any of the claims from 3 to 9, **characterised in that** the angle β is substantially less than 75°.

13. The support according to any of the claims from 3 to 12, **characterised in that** the angle β is substantially greater than 50°.

14. The support according to any of the claims from 3 to 12, **characterised in that** the angle β is substantially greater than 65°.

15. The support according to any of the claims from 3 to 9, **characterised in that** the angle β is substantially equal to around 70°.

16. The support according to any of the claims from 3 to 15, **characterised in that** the angles α and β are substantially equal to one another.

17. The support according to any of the claims from **1** to 16, **characterised in that** the inner portion (25) and the outer portion (26) are connected by a bend profile (29).

18. The support according to any of the claims from 1 to 17, **characterised in that** the retaining edge (18) is made by bending and forming.

19. The support according to any of the claims from 1 to 18 comprising secondary sliding means (20) operating between the rotating unit (6) and an element (19) for locking the rotating unit (6) to the fixing and support element (3).

20. The support according to claim 19, **characterised in that** the secondary sliding means (20) comprise a plurality of balls (14) forming a ring of balls with a diameter greater than the diameter of the ring of balls (14) formed by the primary sliding means (13).

21. A fixing and support element for a support (1) for a swivelling wheel (2), the support (1) comprising a rotating unit (6) rotatably connected to the fixing and support element, primary sliding means (13) operating between the fixing and support element and the rotating unit (6), the fixing and support element comprising a race (16) for the primary sliding means (13) delimited by a corresponding edge (18) for retaining the primary sliding means (13), the fixing and support element being **characterised in that** it is as described in any of the claims from 1 to 20.

## Patentansprüche

1. Ein Halter für ein Schwenkrad (2), der Folgendes umfasst: eine Dreheinheit (6), die drehbar mit einem Befestigungs- und Stützelement (3) verbunden ist, um mit einem entsprechenden Gegenstand verbunden zu werden, erste Schiebemittel (13), die zwischen dem Befestigungs- und Stützelement (3) und der Dreheinheit (6) arbeiten; das Befestigungs- und Stützelement (3) umfasst eine Laufrille (16) für die ersten Schiebemittel (13), die durch einen entsprechenden Rand (18) begrenzt ist, um die ersten Schiebemittel (13) zurückzuhalten; der Rand (18) befindet sich dabei außerhalb der Laufrille (16) und hat die Form eines abgeschnittenen Kegels; **der Halter ist gekennzeichnet dadurch, dass** der Rückhalterand (18) einen inneren Anteil (25), der die Form eines abgeschnittenen Kegels hat, und einen äußeren Anteil (26) hat.

2. Der Halter nach Patentanspruch 1, **gekennzeichnet dadurch, dass** der Rückhalterand (18) im Wesentlichen einen Anteil einer kegelförmigen Fläche darstellt, deren Spitze sich auf der gegenüberliegenden Seite von der Laufrille (16) befindet.

3. Der Halter nach Patentanspruch 1 oder 2, **gekennzeichnet dadurch, dass** der innere Anteil (25) und der äußere Anteil (26) jeweils in einem Winkel α beziehungsweise in einem Winkel β zu einer Ebene (P) stehen, um den Halter mit dem entsprechenden Gegenstand zu verbinden.

4. Der Halter nach Patentanspruch 3, **gekennzeichnet dadurch, dass** der Winkel α im Wesentlichen weniger als 90° hat.

5. Der Halter nach Patentanspruch 3, **gekennzeichnet dadurch, dass** der Winkel α im Wesentlichen weniger als 80° hat.

6. Der Halter nach Patentanspruch 3, **gekennzeichnet dadurch, dass** der Winkel α im Wesentlichen weniger als 75° hat.

7. Der Halter nach einem der Patentansprüche 3 bis 6, **gekennzeichnet dadurch, dass** der Winkel α im Wesentlichen mehr als 50° hat.

8. Der Halter nach einem der Patentansprüche 3 bis 6, **gekennzeichnet dadurch, dass** der Winkel α im Wesentlichen mehr als 65° hat.

9. Der Halter nach Patentanspruch 3, **gekennzeichnet dadurch, dass** der Winkel α im Wesentlichen ungefähr 70° hat.

10. Der Halter nach einem der Patentansprüche 3 bis 9, **gekennzeichnet dadurch, dass** der Winkel β im Wesentlichen weniger als 90° hat.

11. Der Halter nach einem der Patentansprüche 3 bis 9, **gekennzeichnet dadurch, dass** der Winkel β im Wesentlichen weniger als 80° hat.

12. Der Halter nach einem der Patentansprüche 3 bis 9, **gekennzeichnet dadurch, dass** der Winkel β im Wesentlichen weniger als 75° hat.

13. Der Halter nach einem der Patentansprüche 3 bis 12, **gekennzeichnet dadurch, dass** der Winkel β im Wesentlichen mehr als 50° hat.

14. Der Halter nach einem der Patentansprüche 3 bis 12, **gekennzeichnet dadurch, dass** der Winkel β im Wesentlichen mehr als 65° hat.

15. Der Halter nach einem der Patentansprüche 3 bis 9, **gekennzeichnet dadurch, dass** der Winkel β im Wesentlichen ungefähr 70° hat.

16. Der Halter nach einem der Patentansprüche 3 bis 15, **gekennzeichnet dadurch, dass** die Winkel α und β im Wesentlichen gleich sind.

17. Der Halter nach einem der Patentansprüche 1 bis 16, **gekennzeichnet dadurch, dass** der innere Anteil (25) und der äußere Anteil (26) durch ein Biegeprofil (29) miteinander verbunden sind.

18. Der Halter nach einem der Patentansprüche 1 bis 17, **gekennzeichnet dadurch, dass** der Rückhalterand (18) durch Biegen und Umformen hergestellt wird.

19. Der Halter nach einem der Patentansprüche 1 bis 18, der zweite Schiebemittel (20) umfasst, die zwischen der Dreheinheit (6) und einem Element (19), das zum Sperren der Dreheinheit (6) am Befestigungs- und Stützelement (3) dient, arbeiten.

20. Der Halter nach Patentanspruch 19, **gekennzeichnet dadurch, dass** die zweiten Schiebemittel (20) eine Mehrzahl von Kugeln (14) umfassen, die einen Ring aus Kugeln bilden, dessen Durchmesser größer ist als der Durchmesser des Rings aus Kugeln (14), der von den ersten Schiebemitteln (13) gebildet wird.

21. Ein Befestigungs- und Stützelement für den Halter (1) für ein Schwenkrad (2), wobei der Halter (1) eine Dreheinheit (6) umfasst, die drehbar mit dem Befestigungs- und Stützelement verbunden ist, sowie erste Schiebemittel (13), die zwischen dem Befestigungs- und Stützelement und der Dreheinheit (6) arbeiten; das Befestigungs- und Stützelement umfasst eine Laufrille (16) für die ersten Schiebemittel (13), die durch einen entsprechenden Rand (18) begrenzt wird, um die ersten Schiebemittel (13) zurückzuhalten; das Befestigungs- und Stützelement ist **dadurch gekennzeichnet, dass** es so beschaffen ist, wie in einem der Patentansprüche 1 bis 20 beschrieben.

## Revendications

1. Un support pour une roulette pivotante (2) comprenant un groupe tournant (6) associé de façon rotative à un élément (3) de fixation et de support pour l'accouplement avec un objet correspondant, des moyens de coulissement principaux (13) opérant entre l'élément (3) de fixation et de support et le groupe tournant (6), l'élément (3) de fixation et de support comprenant une piste (16) pour les moyens de coulissement principaux (13) délimitée par un bord (18) correspondant servant à retenir les moyens de coulissement principaux (13), le bord (18) étant positionné à l'extérieur de la piste (16) et ayant la forme d'un cône tronqué, le support étant **caractérisé en ce que** le bord (18) de retenue a une portion intérieure (25) ayant la forme d'un cône tronqué et une portion extérieure (26).

2. Le support selon la revendication 1, **caractérisé en ce que** le bord (18) de retenue constitue essentiellement une portion d'une surface conique ayant son sommet situé du côté opposé à la piste (16).

3. Le support selon la revendication 1 ou 2, **caractérisé en ce que** la portion intérieure (25) et la portion extérieure (26) sont respectivement inclinées d'un angle α et d'un angle β par rapport à un plan (P) d'accouplement du support avec l'objet correspondant.

4. Le support selon la revendication 3, **caractérisé en ce que** l'angle α est essentiellement inférieur à 90°.

5. Le support selon la revendication 3, **caractérisé en ce que** l'angle α est essentiellement inférieur à 80°.

6. Le support selon la revendication 3, **caractérisé en ce que** l'angle α est essentiellement inférieur à 75°.

7. Le support selon l'une quelconque des revendications de 3 à 6, **caractérisé en ce que** l'angle α est essentiellement supérieur à 50°.

8. Le support selon l'une quelconque des revendications de 3 à 6, **caractérisé en ce que** l'angle α est essentiellement supérieur à 65°.

9. Le support selon la revendication 3, **caractérisé en ce que** l'angle α est essentiellement égal à 70° environ.

10. Le support selon l'une quelconque des revendications de 3 à 9, **caractérisé en ce que** l'angle β est essentiellement inférieur à 90°.

11. Le support selon l'une quelconque des revendications de 3 à 9, **caractérisé en ce que** l'angle β est essentiellement inférieur à 80°.

12. Le support selon l'une quelconque des revendications de 3 à 9, **caractérisé en ce que** l'angle β est essentiellement inférieur à 75°.

13. Le support selon l'une quelconque des revendications de 3 à 12, **caractérisé en ce que** l'angle β est essentiellement supérieur à 50°.

14. Le support selon l'une quelconque des revendications de 3 à 12, **caractérisé en ce que** l'angle β est essentiellement supérieur à 65°.

15. Le support selon l'une quelconque des revendications de 3 à 9, **caractérisé en ce que** l'angle β est essentiellement égal à 70° environ.

16. Le support selon l'une quelconque des revendications de 3 à 15, **caractérisé en ce que** les angles α et β sont essentiellement égaux entre eux.

17. Le support selon l'une quelconque des revendications de 1 à 16, **caractérisé en ce que** la portion intérieure (25) et la portion extérieure (26) sont raccordées par un profil (29) de pliage.

18. Le support selon l'une quelconque des revendications de 1 à 17, **caractérisé en ce que** le bo rd (18) de retenue est réalisé par pliage et formage.

19. Le support selon l'une quelconque des revendications de 1 à 18 , **caractérisé en ce qu'**il comprend des moyens de coulissement secondaires (20) opérant entre le groupe tournant (6) et un élément (19) servant à bloquer ledit groupe tournant (6) à l'élément (3) de fixation et de support.

20. Le support selon la revendication 19, **caractérisé en ce que** les moyens de coulissement secondaires (20) comprennent une pluralité de billes (14) formant une couronne de billes ayant un diamètre supérieur au diamètre de la couronne de billes (14) formée par les moyens de coulissement principaux (13).

21. Un élément de fixation et de support pour un support (1) pour une roulette pivotante (2), le support (1) comprenant un groupe tournant (6) associé de façon rotative à l'élément de fixation et de support, des moyens de coulissement principaux (13) opérant entre l'élément de fixation et de support et le groupe tournant (6), l'élément de fixation et de support comprenant une piste (16) pour les moyens de coulissement principaux (13) délimitée par un bord (18) correspondant servant à retenir les moyens de coulissement principaux (13), l'élément de fixation et de support étant **caractérisé en ce qu'**il est tel que défini dans l'une quelconque des revendications de 1 à 20.
